# EUROPÄISCHE PATENTSCHRIFT

(11) **EP 1 116 902 B1**
(45) Veröffentlichungstag und Bekanntmachung des Hinweises auf die Patenterteilung: **01.08.2001**
(21) Anmeldenummer: 00100522.2
(22) Anmeldetag: 12.01.2000
(51) Int. Cl.: F16H 61/24

(54) **Schaltvorrichtung für ein Gangwechselgetriebe**
Ratio shift mechanism for a change speed gearbox
Dispositif de commande d'une boîte de vitesses

(43) Veröffentlichungstag der Anmeldung: 18.07.2001
(73) Patentinhaber: Ford Global Technologies, Inc., A subsidiary of Ford Motor Company, Dearborn, Michigan 48126 (US)
(72) Erfinder: Chazotte, Jean-Pierre, 50996 Koeln (DE); Deidewig, Hartmut, 51503 Roesrath (DE)
(74) Vertreter: Drömer, Hans-Carsten, Dipl.-Ing.

(56) Entgegenhaltungen:
- DE-A- 19 523 141
- US-A- 3 983 965
- US-A- 5 791 194
- PATENT ABSTRACTS OF JAPAN vol. 016, no. 072 (M-1213), 21. Februar 1992 (1992-02-21) -& JP 03 260412 A (NIPPON CABLE SYST INC), 20. November 1991 (1991-11-20)

## Beschreibung

Die Erfindung bezieht sich auf eine Schaltvorrichtung für ein Gangwechselgetriebe, insbesondere in Kraftfahrzeugen, mit einer drehbaren und axial verschieblichen Schaltwelle zur Auswahl der Gangstufen, wobei die Schaltwelle mit einem Handschalthebel und mit Zusatzmassen kinematisch verbunden ist derart, daß Kraftspitzen am Handschalthebel während der einzelnen Schaltvorgänge abgebaut werden.

Heutige Schaltvorrichtungen weisen sehr große Zusatzmassen auf, die ein angenehmes Schaltgefühl beim Einlegen der einzelnen Gangstufen erzeugen indem sie die Betätigung der Gangschaltung durch ihre Massenträgheit unterstützen. Zur Reduzierung dieser Zusatzmassen wird in der DE 19523141 gemäß dem Oberbegriff des Anspruchs 1 vorgeschlagen, die Zusatzmassen über eine Hebelgetriebe anzutreiben und damit die Massenträgheit durch die Übersetzung besser auszunutzen. Trotz der Hebelwirkung ist jedoch immer noch eine bestimmte Masse notwendig, da ein beliebiges Übersetzungsverhältnis nicht einfach realisierbar ist. Nachteilig ist auch, daß das Hebelgetriebe außen am Getriebegehäuse im Bereich des Schalthebels angebracht ist und deshalb gegen Verschmutzung geschützt bzw. entsprechend robust und damit schwer ausgelegt werden muß.

Aufgabe der vorliegenden Erfindung ist es deshalb, eine Schaltvorrichtung der eingangs genannten Art zu schaffen, die nur unwesentliche Zusatzmassen benötigt und die robust ausgeführt werden kann.

Diese Aufgabe wird gelöst, indem die Zusatzmasse ein mehrstufiges Schwungradgetriebe ist, welches mit der Schaltwelle getrieblich verbunden ist. Dabei kann das Schwungradgetriebe mit der Schaltwelle sowohl in Drehrichtung der Schaltwelle als auch in Axialrichtung der Schaltwelle getrieblich verbunden sein. Im ersteren Fall wird der Einrückvorgang unterstützt, im letzteren die Auswahl der Schaltgassen.

Der Vorteil des Schwungradgetriebes ist, daß selbst bei geringem Gewicht ein hohes Drehträgheitsmoment am Ausgang des Schwungradgetriebes wirkt und damit die relative kleinen Bewegungen der Schaltwelle sehr gleichmäßig ablaufen. Ein Schwungradgetriebe kann, abhängig von der Anzahl der Radsätze, mit beliebigem Übersetzungsverhältnis ausgeführt sein. Damit wird bei sehr kleinem Gewicht ein sehr großes Drehträgheitsmoment erzeugt. Im Vergleich zu bestehenden Schaltvorrichtungen lassen sich so über 90 % des Gewichtes der Zusatzmassen einsparen.

Die Wirkung des Schwungradgetriebes besteht im wesentlichen darin, ein angenehmes Schaltgefühl beim Einlegen des Ganges zu erzeugen. Beim Beginn des Einrückvorganges treibt die Drehung der Schaltwelle das Schwungradgetriebe an, wodurch am Handschalthebel direkt ein bestimmter, als angenehm empfundener Betätigungsdruck erfahren wird. Sobald die Schaltwelle und damit das Schwungradgetriebe in Drehung versetzt ist, kommt der Punkt, wo die Synchronisiereinrichtung beginnt den Gang einzurücken, was aber der Drehung der Schaltwelle einen plötzlichen Widerstand entgegensetzt. Die Drehträgheit des Schwungradgetriebes hilft, diesen Widerstand zu überwinden ohne das am Handschalthebel ein größerer Widerstand zu spüren ist. Das Einrücken eines Ganges selber benötigt eine Kraft, die vom Schwungradgetriebe bis zu dessen Stillstand unterstützt wird. Insgesamt wird durch das Schwungradgetriebe der empfundene Kraftverlauf am Handschalthebel während des Gangeinlegens egalisiert; es entsteht das besagte angenehme Schaltgefühl.

Vorzugsweise ist das Schwungradgetriebe im Getriebegehäuse angeordnet. Der geringe Platzbedarf eines Schwungradgetriebes ermöglicht die Anbringung an einer beliebigen Stelle im Getriebegehäuse, wo eine getriebliche Verbindung zur Schaltwelle ausführbar ist. Weiterer Vorteil ist, daß im Getriebegehäuse keine Kapselung und keine Abdichtung des Schwungradgetriebes für die Schmierung bzw. gegen Verschmutzung vorgesehen werden muß.

Bei einer vorteilhaften Ausgestaltung der Erfindung ist das Schwungradgetriebe auf der Schaltwelle unverschieblich in Axialrichtung der Schaltwelle angeordnet. Damit entfallen für die getriebliche Verbindung zwischen Schwungradgetriebe und Schaltwelle verschiebbare Übertragsmittel wie Schiebekupplungen oder Schiebezahnräder. Das Gehäuse des Schwungradgetriebes ist drehfest zum Getriebegehäuse angeordnet, bleibt aber in Axialrichtung der Schaltwelle gegenüber dem Getriebegehäuse verschiebbar. Das Gehäuse des Schwungradgetriebes selbst kann in auf der Schaltwelle angeordneten Schaltmitteln integriert sein.

Für eine kostengünstige Ausgestaltung der Erfindung besteht das Schwungradgetriebe aus einem Satz gleicher Zahnradmodule. Ein Zahnradmodul besteht aus einem kleinen Ritzel und einem großen Zahnrad, beide nebeneinander auf der gleichen Achse angeordnet und drehfest verbunden. Solche Zahnradmodule können in einem Stück z. B. als Kunststoffspritzguß, als Feinstanzteil oder als Sintermetallpreßteil hergestellt werden. Mehrere dieser Module werden wie ein Schwungradgetriebe in einem Gehäuse angeordnet, wobei das Zahnradmodul mit der höchsten bzw. letzten Übersetzungstufe die Hauptanteile der Funktion des Schwungrades übernimmt.

Eine weitere vorteilhafte Ausgestaltung sieht vor, daß das Schwungradgetriebe direkt mit dem Schaltfinger, der die Schaltgabeln betätigt, getrieblich verbunden ist. Dies ergibt eine kompakte Bauweise und einen sehr direkten Antrieb des Schaltfingers durch das Schwungradgetriebe. Bevorzugt weist der Schaltfinger dafür eine Verzahnung auf, die mit einem Zahnrad des Schwungradgetriebes kämmt.

Weitere Einzelheiten ergeben sich aus der nachstehenden Beschreibung einer in den Zeichnungen dargestellten Ausführungsform der Erfindung. Es zeigen:
- **Fig. 1**: eine perspektivische Darstellung einer erfindungsgemäßen Schaltvorrichtung mit Schwungradgetriebe;
- **Fig. 2**: eine perspektivische Ansicht des Schaltfingers mit Verzahnung;
- **Fig. 3**: eine perspektivische Ansicht eines Zahnradmodules; und
- **Fig. 4**: eine perspektivische Ansicht des Schwungradgetriebes.

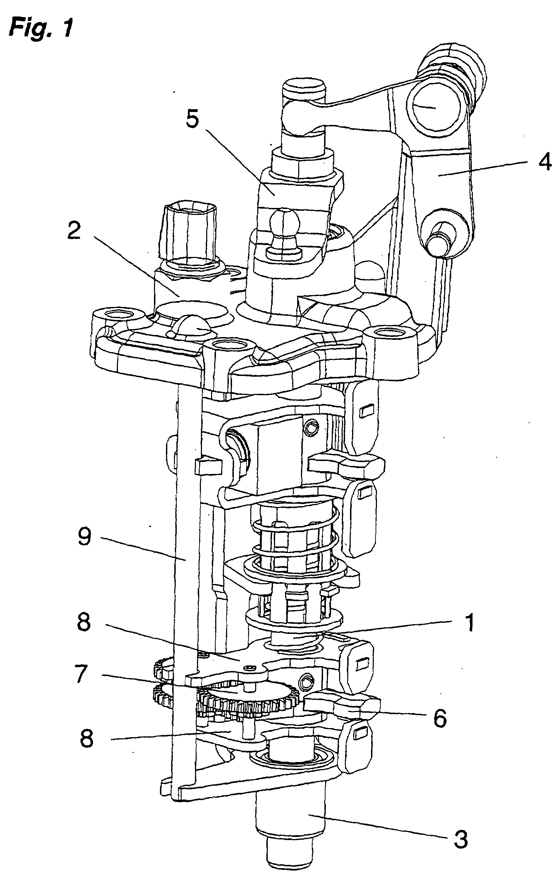

In **Fig. 1** ist der Zusammenbau einer Schaltvorrichtung, wie sie bei einem Gangwechselgetriebe zum Einsatz kommt, perspektivisch dargestellt. Die Schaltwelle 1 ist gelagert im Schaltvorrichtungsdeckel 2 und am anderen Ende in einer Führungsbuchse 3, welche wiederum im nicht dargestellten Getriebegehäuse gelagert ist. Der Antrieb der Schaltwelle 1 erfolgt über den Schalthebel 4 für die axiale Verschiebung der Schaltwelle 1 zur Auswahl der Schaltgasse und dem Schalthebel 5 für die Drehbewegung der Schaltwelle 1 für das Einrücken der Gänge. Auf der Schaltwelle 1 ist der Schaltfinger 6 angeordnet, der auf die Schaltgabeln, hier nicht dargestellt, die Bewegung der Schaltwelle 1 überträgt.

Direkt am Schaltfinger 6 ist auf der Schaltwelle 1 das Schwungradgetriebe 7, welches mit dem Schaltfinger 6 in getrieblicher Verbindung steht, angeordnet. Als Lagergehäuse des Schwungradgetriebes 7 dient das um den Schaltfinger 6 auf der Schaltwelle 1 angeordnete Führungsteil 8, das zusammen mit der Schaltwelle 1 in Axialrichtung der Schaltwelle 1 verschoben werden kann, von der Drehbewegung der Schaltwelle 1 entkoppelt ist und sich dazu an einem Ende an einem im Getriebegehäuse verankerten Führungsstift 9 abstützt.

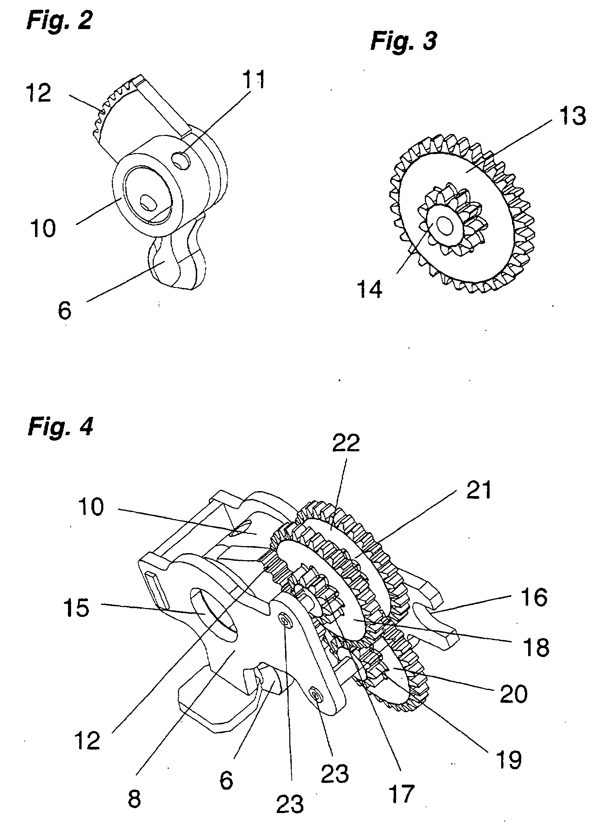

In **Fig. 2** ist der Schaltfinger 6 dargestellt. Er ist mit der Nabe 10 verbunden, die auf der Schaltwelle 1 sitzt und über das Stiftloch 11 mit der Schaltwelle 1 verstiftet und damit unverückbar und drehfest verbunden ist. Ebenfalls auf der Nabe ist die Verzahnung 12 angebracht, welche die getriebliche Verbindung zum Schwungradgetriebe 7 herstellt.

Das Schwungradgetriebe 7 besteht im wesentlichen aus drei gleichen Zahnradmodulen einschließlich der zugehörigen Achsen. In **Fig. 3** ist ein solches Zahnradmodul perspektivisch abgebildet. Es besteht aus einem Zahnrad 13 und einem daran angeflanschten Ritzel 14, die beide eine gemeinsame Achse aufweisen.

In **Fig. 4** ist der Aufbau des Schwungradgetriebes im Führungsteil 8 gezeigt. Führungsteil 8 und Schaltfinger 6 sind gemeinsam auf der Schaltwelle 1 mittels der Schaltwellenbohrung 15 des Führungsteiles 8 und der Nabe 10 gelagert. Während die Nabe 10 drehfest mit der Schaltwelle 1 verbunden ist, ist die Schaltwelle 1 im Führungsteil 8 drehbar angeordnet. Nabe 10 und Führungsteil 8 sind auf der Schaltwelle 1 in Axialrichtung der Schaltwelle 1 gesehen unverrückbar. Das Führungsteil 8 greift mit der Aussparung 16 in den Führungsstift 9 ein und ist so zum einen drehfest zum Getriebegehäuse und zum anderen in Axialrichtung der Schaltwelle 1 verschieblich zum Getriebegehäuse gelagert. Bei der Auswahl der Schaltgasse während des Schaltvorganges werden damit Führungsteil 8 und Schaltfinger 6 gleichzeitig in Axialrichtung der Schaltwelle 1 verschoben. Beim Einrücken eines Ganges dreht sich der Schaltfinger 6 mit der Schaltwelle 1, während das Führungsteil 8 durch die Lagerung in der Aussparung 16 stehenbleibt. Diese relative Drehbewegung zwischen Schaltfinger 6 und Führungsteil 8 wird für den Schwungradantrieb ausgenutzt.

Dazu weist der Schaltfinger 6 auf der Nabe 10 die Verzahnung 12 auf, die mit dem Ritzel 17 des Antriebszahnrades 18 kämmt. Dieses kämmt mit dem Ritzel 19 des Zwischenzahnrades 20, welches wiederum mit dem Ritzel 21 des Schwungzahnrades 22 kämmt. Das Schwungzahnrad 22 übernimmt die Funktion des Schwungrades und steht mit keinem anderen Zahnrad in getrieblicher Verbindung. Alle Zahnräder sind auf den Achsen 23 im Führungsteil 8 gelagert, wobei Antriebszahnrad 18 und Schwungzahnrad 22 eine gemeinsame Achse aufweisen. Damit baut das Schwungradgetriebe sehr kompakt und benötigt nur zwei verschiedene Bauteile, nämlich zweimal die Achse 23 und dreimal das Zahnradmodul. Die Lagerung der Achsen 23 im Führungsteil 8 erfordert keine zusätzlichen Teile. Mittels des Schwungradgetriebes wird die Funktion der Zusatzmasse mit geringen Kosten, geringem Zusatzgewicht und geringem Platzbedarf realisiert.

## Patentansprüche

1. Schaltvorrichtung für ein Gangwechselgetriebe, insbesondere in Kraftfahrzeugen, mit einer drehbaren und axial verschieblichen Schaltwelle (1) zur Auswahl der Gangstufen, wobei die Schaltwelle (1) mit einem Handschalthebel und mit Zusatzmassen kinematisch verbunden ist derart, daß Kraftspitzen am Handschalthebel während der einzelnen Schaltvorgänge abgebaut werden,
**dadurch gekennzeichnet,** daß
die Zusatzmasse ein mehrstufiges Schwungradgetriebe (7) ist, welches mit der Schaltwelle (1) getrieblich verbunden ist.

2. Schaltvorrichtung nach Anspruch 1,
**dadurch gekennzeichnet,** daß
das mehrstufige Schwungradgetriebe (7) mit der Schaltwelle (1) in Drehrichtung der Schaltwelle (1) getrieblich verbunden ist.

3. Schaltvorrichtung nach Anspruch 1,
**dadurch gekennzeichnet,** daß
das mehrstufige Schwungradgetriebe mit der Schaltwelle (1) in Axialrichtung der Schaltwelle (1) getrieblich verbunden ist.

4. Schaltvorrichtung nach Anspruch 1,
**dadurch gekennzeichnet**, daß
das mehrstufige Schwungradgetriebe (7) im Getriebegehäuse angeordnet ist.

5. Schaltvorrichtung nach Anspruch 1,
**dadurch gekennzeichnet,** daß
das mehrstufige Schwungradgetriebe (7) ortsfest zum Getriebegehäuse angeordnet ist.

6. Schaltvorrichtung nach Anspruch 2,
**dadurch gekennzeichnet,** daß
das mehrstufige Schwungradgetriebe (7) auf der Schaltwelle (1) unverschieblich in Axialrichtung der Schaltwelle (1) angeordnet ist.

7. Schaltvorrichtung nach Anspruch 1,
**dadurch gekennzeichnet,** daß
das mehrstufige Schwungradgetriebe (7) aus einem Satz gleicher Zahnradmodule besteht.

8. Schaltvorrichtung nach Anspruch 1,
**dadurch gekennzeichnet,**daß
ein Schaltfinger (6) direkt mit dem mehrstufigen Schwungradgetriebe (7) in getrieblicher Verbindung steht.

9. Schaltvorrichtung nach Anspruch 8,
**dadurch gekennzeichnet,** daß
der Schaltfinger (8) eine Verzahnung aufweist, die mit einem Zahnrad des mehrstufigen Schwungradgetriebes (7) kämmt.

## Claims

1. Ratio shift mechanism for a change speed gearbox, in particular in motor vehicles, with a rotatable and axially displaceable shift shaft (1) for selecting the gear stages, wherein the shift shaft (1) is kinematically connected with a hand shift lever and with secondary masses in such a way that force peaks on the hand shift lever during the individual shift processes are reduced,
characterised in that
the secondary mass is a multi-stage flywheel transmission (7), which is in gearing connection with the shift shaft (1).

2. Ratio shift mechanism according to Claim 1,
characterised in that
the multi-stage flywheel transmission (7) is in gearing connection with the shift shaft (1) in the rotation direction of the shift shaft (1).

3. Ratio shift mechanism according to Claim 1,
characterised in that
the multi-stage flywheel transmission is in gearing connection with the shift shaft (1) in axial direction of the shift shaft (1).

4. Ratio shift mechanism according to Claim 1,
characterised in that
the multi-stage flywheel transmission (7) is arranged in the gearbox.

5. Ratio shift mechanism according to Claim 1,
characterised in that
the multi-stage flywheel transmission (7) is arranged in a fixed way to the gearbox.

6. Ratio shift mechanism according to Claim 2,
characterised in that
the multi-stage flywheel transmission (7) is arranged on the shift shaft (1) in an undisplaceable way in axial direction of the shift shaft (1).

7. Ratio shift mechanism according to Claim 1,
characterised in that
the multi-stage flywheel transmission (7) consists of a set of identical toothed wheel modules.

8. Ratio shift mechanism according to Claim 1,
characterised in that
a shift finger (6) is in direct gearing connection with the multi-stage flywheel transmission (7).

9. Ratio shift mechanism according to Claim 8,
characterised in that
the shift finger (8) has toothing, which intermeshes with a toothed wheel of the multi-stage flywheel transmission (7).

## Revendications

1. Dispositif de commande pour une boîte de vitesses, en particulier dans des véhicules automobiles, avec un arbre de commande de changement de vitesses pivotant et déplaçable axialement (1) pour la sélection des vitesses successives, l'arbre de commande (1) étant relié cinématiquement à un levier de changement de vitesse manuel et à des masses additionnelles, de telle sorte que des pointes de force dans le levier de changement de vitesse manuel au cours du passage des différentes vitesses sont éliminées, caractérisé en ce que la masse additionnelle est un engrenage à volants à plusieurs étages (7), qui est relié en entraînement à l'arbre de commande (1).

2. Dispositif de commande selon la revendication 1, caractérisé en ce que l'engrenage à volants à plusieurs étages (7) est relié en entraînement à l'arbre de commande (1) dans le sens de rotation de l'arbre de commande (1).

3. Dispositif de commande selon la revendication 1, caractérisé en ce que l'engrenage à volants à plusieurs étages (7) est relié en entraînement à l'arbre de commande (1) dans le sens axial de l'arbre de commande (1).

4. Dispositif de commande selon la revendication 1, caractérisé en ce que l'engrenage à volants à plusieurs étages (7) est disposé dans le carter de la boîte de vitesses.

5. Dispositif de commande selon la revendication 1, caractérisé en ce que l'engrenage à volants à plusieurs étages (7) est disposé de façon fixe par rapport au carter de la boîte de vitesses.

6. Dispositif de commande selon la revendication 2, caractérisé en ce que l'engrenage à volants à plusieurs étages (7) est disposé sur l'arbre de commande (1) de façon à ne pouvoir être déplacé dans le sens axial de l'arbre de commande (1).

7. Dispositif de commande selon la revendication 1, caractérisé en ce que l'engrenage à volants à plusieurs étages (7) est constitué d'un ensemble de modules de roues dentées identiques.

8. Dispositif de commande selon la revendication 1, caractérisé en ce qu'un doigt de commande (6) est relié en entraînement directement à l'engrenage à volants à plusieurs étages (7).

9. Dispositif de commande selon la revendication 8, caractérisé en ce que le doigt de commande (6) comporte une denture qui s'engrène avec une roue dentée de l'engrenage à volants à plusieurs étages (7).
